(19) Europäisches Patentamt
European Patent Office
Office européen des brevets

(11) **EP 3 740 784 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **18808310.9**

(22) Anmeldetag: **22.11.2018**

(51) Internationale Patentklassifikation (IPC):
**G01S 13/58** (2006.01)    **G01S 13/32** (2006.01)
**G01S 13/931** (2020.01)

(52) Gemeinsame Patentklassifikation (CPC):
**G01S 13/58; G01S 13/32; G01S 13/589;
G01S 13/931;** G01S 2013/93185; G01S 2013/9321;
G01S 2013/93271

(86) Internationale Anmeldenummer:
**PCT/EP2018/082299**

(87) Internationale Veröffentlichungsnummer:
**WO 2019/141415 (25.07.2019 Gazette 2019/30)**

(54) **VERFAHREN UND VORRICHTUNG ZUM DETEKTIEREN KRITISCHER QUERBEWEGUNGEN**

METHOD AND DEVICE FOR DETECTING CRITICAL TRANSVERSE MOVEMENTS

PROCÉDÉ ET DISPOSITIF DE DÉTECTION DE MOUVEMENTS TRANSVERSAUX CRITIQUES

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **18.01.2018 DE 102018200757**

(43) Veröffentlichungstag der Anmeldung:
**25.11.2020 Patentblatt 2020/48**

(73) Patentinhaber: **Robert Bosch GmbH**
**70442 Stuttgart (DE)**

(72) Erfinder:
• **ZIMMER, Stephan**
**76137 Karlsruhe (DE)**
• **BUDDENDICK, Hermann**
**71067 Sindelfingen (DE)**

(56) Entgegenhaltungen:
EP-A1- 2 068 173        DE-A1- 19 638 387
DE-A1-102013 018 310    US-A1- 2015 353 081

**Beschreibung**

Die vorliegende Erfindung betrifft ein Verfahren zum Detektieren kritischer Querbewegungen und eine Vorrichtung zum Detektieren kritischer Querbewegungen. Die Erfindung betrifft insbesondere eine entsprechende Vorrichtung für ein Fahrzeug bzw. für ein Fahrerassistenzsystem eines Fahrzeugs.

Stand der Technik

Moderne Fahrzeuge verfügen typischerweise über Radarvorrichtungen, welche einen gewissen Umfeldbereich des Fahrzeugs überwachen. Anhand der erzeugten Radardaten können Objekte im Umfeld des Fahrzeugs erkannt werden und der Fahrer des Fahrzeugs kann frühzeitig vor kollisionskritischen Situationen gewarnt werden. Weiter ist es möglich, bestimmte Fahrzeugfunktionen autonom auf Basis der Radardaten zu steuern. Insbesondere kann beim Erkennen eines kreuzenden Hindernisses eine Notbremsung initiiert werden.

Bekannt sind Radarvorrichtungen mit verschiedenen Sendeantennen, welche unterschiedliche Erfassungsbereiche aufweisen. Beispielsweise kann mittels einer ersten Antenne ein relativ schmales Fernbereichssichtfeld überwacht werden, während mittels einer zweiten Antenne ein breiteres Nahbereichssichtfeld überwacht wird.

Weiter ist die Verwendung unterschiedlicher Modulationsverfahren bekannt. So offenbart die DE 10 2004 024 706 A1 einen Radarsensor für Kraftfahrzeuge zur Kollisionsvermeidung bzw. Kollisionsstärkenverminderung, wobei Radarstrahlung in mindestens zwei oder mehr unterschiedlichen Modulationsarten ausgesendet wird.

Ein bekanntes Verfahren ist die Dauerstrichmodulation bzw. CW-Modulation (continuous wave), wobei ein Radarsignal mit konstanter Amplitude und konstanter Frequenz ausgesendet wird. Das empfangene reflektierte Radarsignal weist eine Frequenz auf, welche sich von der Frequenz des ausgesendeten Radarsignals unterscheidet. Die Frequenzdifferenz hängt von der Relativgeschwindigkeit des beobachteten Objekts ab. Die CW-Modulation ermöglicht es, die Relativgeschwindigkeit mit einer hohen Genauigkeit im Bereich von bis zu 0,1 Meter pro Sekunde zu bestimmen.

Ein weiteres bekanntes Modulationsverfahren ist die frequenzmodulierte Dauerstrichmodulation bzw. FMCW-Modulation (frequency modulated continuous wave). In diesem Fall wird ein Radarsignal mit einer veränderlichen Frequenz ausgesendet, sodass durch Messung des reflektierten Radarsignals sowohl die Geschwindigkeit als auch der Abstand des untersuchten Objekts bestimmt werden können. Die Genauigkeit der Geschwindigkeitsbestimmung ist jedoch typischerweise geringer als bei einer CW-Modulation.

Die DE 196 38 387 A1 und die EP 2 068 173 A1 offenbaren Verfahren zur Erkennung von Objektbewegungen, wobei Relativgeschwindigkeiten mit zwei Radareinrichtungen gemessen werden. Die DE 10 2013 0183 10 A1 bezieht sich auf ein Verfahren zur Bestimmung einer Bewegung eines Objekts, wobei ein Geschwindigkeitsprofil des Objekts ermittelt wird.

Offenbarung der Erfindung

Die Erfindung stellt ein Verfahren mit den Merkmalen des Patentanspruchs 1 und eine Vorrichtung mit den Merkmalen des Patentanspruchs 8 bereit.

Bevorzugte Ausführungsformen sind Gegenstand der jeweiligen Unteransprüche.

Vorteile der Erfindung

Die Erfindung macht sich die oben angesprochene genaue Geschwindigkeitsauflösung von CW-modulierten Radarsignalen zu Nutze. Ohne eine genaue Abstandsbestimmung kann erfindungsgemäß bereits anhand des CW-Radarsignals selbst detektiert werden, ob ein Objekt eine kritische Querbewegung vollführt. Unter einer kritischen Querbewegung ist hierbei zu verstehen, dass sich das Objekt entlang einer Objekttrajektorie auf die Trajektorie der Radarvorrichtung zubewegt, wobei eine Kollision zu erwarten ist bzw. wahrscheinlich ist. Eine Querbewegung beschreibt somit allgemein kreuzende Trajektorien, wobei der eingeschlossene Winkel nicht notwendiger Weise 90° betragen muss.

Vorteilhafterweise ist das Verfahren unabhängig von der Art der Objekte. So können Fußgänger genauso erkannt werden wie Fahrradfahrer, Motorradfahrer oder andere Fahrzeuge.

Gemäß einer bevorzugten Weiterbildung des Verfahrens weist die Radarvorrichtung eine Vielzahl von Antenneneinrichtungen mit voneinander verschiedenen Erfassungsbereichen auf. Die Ansteuerung der Antenneneinrichtungen ist davon abhängig, ob eine kritische Querbewegung des Objekts erkannt wird oder nicht. Mittels der Antenneneinrichtungen kann eine genauere Analyse insbesondere eines zeitlichen Verlaufs des Abstands und der Geschwindigkeit des Objekts durchgeführt werden.

Gemäß einer Weiterbildung des Verfahrens wird mindestens eine der Antennenrichtungen angesteuert, ein FMCW-Radarsignal auszusenden, falls eine kritische Querbewegung des Objekts erkannt wird. Anhand des empfangenen reflektierten FMCW-Radarsignals wird eine Bewegung des Objekts genauer bestimmt. Die Antenneneinrichtungen können beispielsweise eine erste Antenneneinrichtung mit einem schmaleren Fernbereichssichtfeld und eine zweite Antenneneinrichtung mit einem breiteren Nahbereichssichtfeld umfassen. Falls ein querendes Objekt erkannt wird, kann beispielsweise die zweite Antenneneinrichtung angesteuert werden, um das Objekt in dem weiten Nahbereichssichtfeld genauer zu tracken. In Abhängigkeit von dem Objektwinkel kann auch die erste Antenneneinrichtung angesteuert werden, falls sich das Objekt in dem Fernbereichssichtfeld befindet. Dadurch kann bereits frühzeitig die Bewegung des Objektes gezielt getrackt werden. Durch die Schaltung in den situationsabhängig günstigsten Sichtbereich kann das Objekt optimal überwacht werden. Anhand der mittels der FMCW-Radarsignale ermittelten Bewegung des Objekts kann genau überprüft werden, ob tatsächlich eine Kollision mit dem Objekt wahrscheinlich ist. In diesem Fall kann eine Warnung an den Fahrer ausgegeben werden oder eine Notbremsung aktiviert werden. Die mittels des CW-Radarsignals erfassten Informationen können zur Klassifizierung herangezogen werden. Dadurch werden die Umfeldinformationen bestmöglich ausgewertet. Die Analyse des CW Radarsignals stellt gemäß dieser Ausführungsform eine Vorfilterung dar, welche dazu dient, bereits möglichst sämtliche kritischen Trajektorien zu erkennen, gleichzeitig jedoch möglichst wenig Falschmeldungen zu erzeugen. Ein zu häufiges Schalten in den breiteren Nahbereich-Modus kann dadurch vermieden werden, was die Leistungsfähigkeit der Vorrichtung erhöht. Insbesondere werden Zentralbereichfunktionen weniger eingeschränkt.

Gemäß einer bevorzugten Weiterbildung des Verfahrens weist die Radarvorrichtung eine Vielzahl von Empfängereinrichtungen auf, wobei die Objektwinkel anhand von Phasenunterschieden des von verschiedenen Empfängereinrichtungen empfangenen reflektierten CW-Radarsignals berechnet werden. Beispielsweise können vier Empfängereinrichtungen vorgesehen sein, welche entlang der Front des Fahrzeugs angeordnet sind. Durch Vergleich der Phasenunterschiede kann der Objektwinkel typischerweise bereits relativ genau bestimmt werden.

Erfindungsgemäß werden die kollisionsrelevanten Spektralbereiche derart bestimmt, dass lediglich Objekte mit negativer Relativgeschwindigkeit betrachtet werden. Außer bei beinahe parallelen Bewegungen des Objekts, welche jedoch auch eine geringere Gefahr darstellen, weisen Objekte, welche mit der Radarvorrichtung kollidieren können, stets eine negative Relativgeschwindigkeit auf. Indem der zu untersuchenden Spektralbereich bereits zur Auswertung eingeschränkt wird, wird der Rechenaufwand dadurch extrem reduziert. Insbesondere entfällt eine nachteilige Beeinflussung durch stehende Ziele.

Gemäß einer bevorzugten Weiterbildung des Verfahrens werden die kollisionsrelevanten Spektralbereiche unter der Annahme einer Konstanz der Eigengeschwindigkeit der Radarvorrichtung, der Relativgeschwindigkeit des Objekts und des Objektwinkels des Objekts bestimmt. Es wird somit vorzugsweise eine lineare Trajektorie des Objekts bzw. eine lineare Trajektorie der Radarvorrichtung ermittelt, unter der Annahme, dass sich die Geschwindigkeiten von Objekt und Fahrzeug nicht ändern, was zumindest auf kurzen Zeitskalen eine sinnvolle Annahme ist. Die Konstanz der Relativgeschwindigkeit und des Objektwinkels folgt aus der Kollisionsbedingung unter Verwendung des Strahlensatzes, was als konstante Peilung bekannt ist.

Gemäß einer Weiterbildung des Verfahrens werden kollisionskritische Relativgeschwindigkeiten und entsprechende kollisionskritische Objektwinkel in Abhängigkeit von der Eigengeschwindigkeit der Radarvorrichtung, in Abhängigkeit von einem Schnittwinkel zwischen einer Trajektorie des Objekts und einer Trajektorie der Radarvorrichtung und in Abhängigkeit von einer Objektgeschwindigkeit des Objekts bestimmt. Die kollisionsrelevanten Spektralbereiche werden auf kollisionskritische Eigengeschwindigkeiten und kollisionskritische Objektwinkel eingeschränkt, welche der Eigengeschwindigkeit der Radarvorrichtung, einem vorgegebenen Bereich der Schnittwinkel und einem vorgegebenen Bereich der Objektgeschwindigkeiten entsprechen. Anhand geometrischer Überlegungen kann unter Verwendung der Kollisionsbedingung ein derartiger Zusammenhang abgeleitet werden. Der genaue Zusammenhang kann beispielsweise in einer Look-Up-Tabelle gespeichert werden, sodass die Vorrichtung in Abhängigkeit der Eigengeschwindigkeit und des vorgegebenen Bereichs der Schnittwinkel bzw. Objektgeschwindigkeiten die entsprechenden kollisionskritischen Relativgeschwindigkeiten und kollisionskritischen Objektwinkel schnell und einfach bestimmen kann.

Die Kollisionsbedingung entspricht für punktförmige Radarvorrichtungen und punktförmige Objekte der Bedingung eines Schnittpunkts der Trajektorie der Radarvorrichtung und der Trajektorie des Objekts zu einem bestimmten zukünftigen Zeitpunkt. Bevorzugt werden die kollisionskritischen Relativgeschwindigkeiten und kollisionskritischen Objektwinkel jedoch weiter unter Berücksichtigung endlicher Ausdehnungen des Objekts und eines Fahrzeugs, welche die Radarvorrichtung aufweist, bestimmt. So kann die Kollisionsbedingung entsprechende Toleranzbereiche berücksichtigen, d. h. die Relativgeschwindigkeiten und Objektwinkel werden in einem gewissen Bereich um die für punktförmige Radarvorrichtungen und punktförmige Objekte ermittelten Werte herum bestimmt.

Erfindungsgemäß wird eine kritische Querbewegung des Objekts detektiert, falls relative Veränderungen der Relativgeschwindigkeit und des Objektwinkels vorgegebene Schwellenwerte nicht überschreiten. Die Querbewegung wird also genau dann erkannt, falls die Relativgeschwindigkeit und der Objektwinkel im Wesentlichen konstant bleiben, das Objekt sich gemäß der angesprochenen konstanten Peilung also auf einen Kollisionspunkt mit der Radarvorrichtung zubewegt.

Kurze Beschreibung der Zeichnungen

Es zeigen:

Figur 1 ein schematisches Blockschaltbild einer Vorrichtung gemäß einer Ausführungsform der Erfindung;

Figur 2 eine schematische Draufsicht auf ein Fahrzeug mit einer Vorrichtung und ein Objekt zur Erläuterung einer möglichen Kollision;

Figur 3 Abhängigkeiten der Relativgeschwindigkeit von der Fahrzeuggeschwindigkeit für verschiedene Objektgeschwindigkeiten des Objekts;

Figur 4 Relativgeschwindigkeiten und Objektwinkel eines Objekts in Abhängigkeit der Objektgeschwindigkeit und des Schnittwinkels zwischen den jeweiligen Trajektorien; und

Figur 5 ein Flussdiagramm eines Verfahrens zum Detektieren kritischer Querbewegungen gemäß einer Ausführungsform der Erfindung.

In allen Figuren sind gleiche bzw. funktionsgleiche Elemente und Vorrichtungen mit denselben Bezugszeichen versehen.

Beschreibung der Ausführungsbeispiele

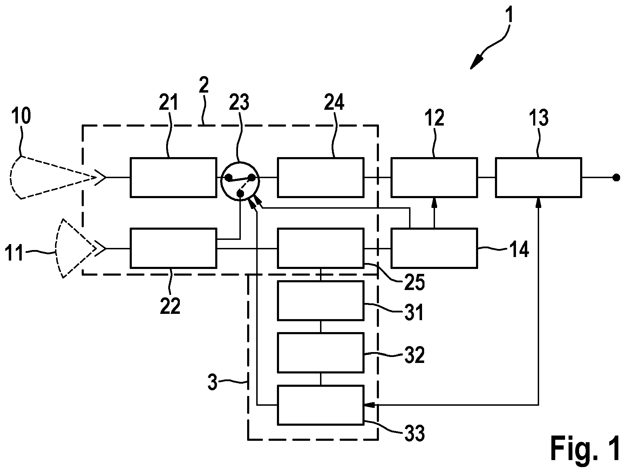

Figur 1 zeigt ein Blockschaltbild einer Vorrichtung 1 zum Detektieren kritischer Querbewegungen. Die Vorrichtung 1 weist eine erste Antenneneinrichtung 21 mit einem schmalen Fernbereichssichtfeld 10 und eine zweite Antenneneinrichtung 22 mit einem breiten Nahbereichssichtfeld 11 auf. Die Antenneneinrichtungen 21, 22 umfassen jeweils mindestens eine Sendeantenne zum Aussenden eines Radarsignals und eine Vielzahl von Empfängerantennen zum Empfangen des reflektierten Radarsignals. Gemäß einigen Ausführungsformen können die Antennen sowohl zum Aussenden von Radarsignalen als auch zum Empfangen von Radarsignalen ausgebildet sein.

Über eine Schalteinrichtung 23 kann alternativ die erste Antenneneinrichtung 21 oder die zweite Antenneneinrichtung 22 betrieben werden. Eine erste Steuereinrichtung 24 kann die Antenneneinrichtung 21, 22 zum Aussenden eines FMCW-modulierten Radarsignals ansteuern und kann das empfangene FMCW-modulierte reflektierte Radarsignal auswerten.

Eine zweite Steuereinrichtung 25 ist mit der zweiten Antenneneinrichtung 22 gekoppelt und steuert diese zum Aussenden eines CW-modulierten Radarsignals an. Die zweite Steuereinrichtung 25 ist weiter dazu ausgebildet, anhand des empfangenen CW-modulierten Radarsignals Radardaten zu generieren und zur Auswertung an eine Recheneinrichtung 3 zu übertragen. Die Antenneneinrichtungen 21, 22, die Schalteinrichtung 23, die erste Steuereinrichtung 24 und die zweite Steuereinrichtung 25 bilden eine Radarvorrichtung 2 der Vorrichtung 1.

Die Recheneinrichtung 3 umfasst eine Detektionseinrichtung 31, welche zunächst kollisionsrelevante Spektralbereiche der Radardaten ermittelt. Die Detektionseinrichtung 31 empfängt hierzu den Wert der von einer nicht gezeigten Sensoreinrichtung bestimmten Eigengeschwindigkeit der Radarvorrichtung 1, welche insbesondere einer Eigengeschwindigkeit eines Fahrzeugs entsprechen kann, welches die Radarvorrichtung 1 aufweist. Die Bestimmung der relevanten Spektralbereiche wird anhand der folgenden Figuren genauer erläutert.

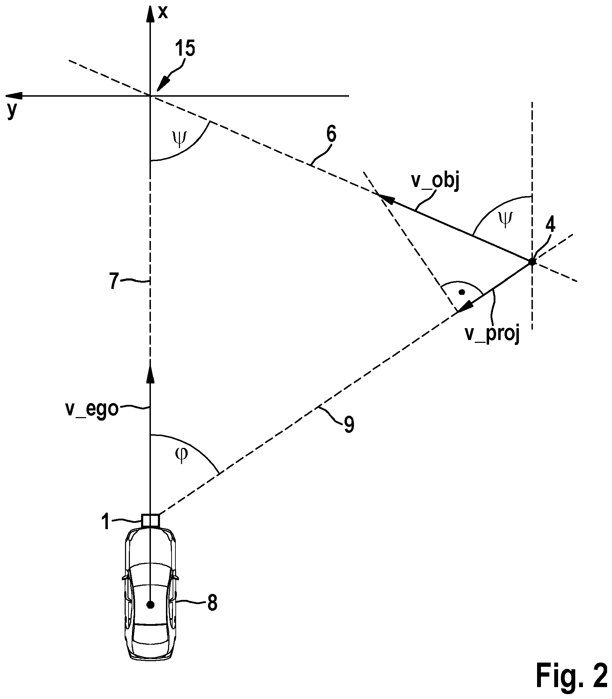

Die Figur 2 zeigt eine schematische Draufsicht auf ein Fahrzeug 8 mit der Vorrichtung 1, wobei sich ein Objekt 4 in einem Umfeld des Fahrzeugs 8 befindet. Bei dem Objekt 4 kann es sich beispielsweise um einen Fußgänger, einen Fahrradfahrer oder ein weiteres Fahrzeug handeln. Das Fahrzeug 8 bewegt sich mit der Eigengeschwindigkeit v_ego entlang einer geradlinigen Fahrzeugtrajektorie 7, welche eine x-Achse und eine senkrecht dazu stehende y-Achse definiert. Die Hauptstrahlungsrichtung der Radarvorrichtung 2 verläuft ebenfalls entlang der x-Achse, die Erfindung ist jedoch nicht auf derartig ausgerichtete Radarvorrichtungen 2 beschränkt. Das Objekt 4 erscheint unter einem Objektwinkel bzw. Azimutwinkel $\varphi$ bezüglich der x-Achse und bewegt sich mit einer Objektgeschwindigkeit v_obj entlang einer Objekttrajektorie 6 auf einen Kollisionspunkt 15 zu. Am Kollisionspunkt 15 schneiden sich die Objekttrajektorie 6 und die Fahrzeugtrajektorie 7 unter einem Schnittwinkel $\psi$. Zur Herleitung der messbaren Relativgeschwindigkeit v_rad des Objekts 4 ist die Projektion v_proj der Objektgeschwindigkeit v_obj auf eine Verbindungslinie 9 zwischen der Vorrichtung 1 und dem Objekt 4 heranzuziehen.

Falls die Eigengeschwindigkeit v_ego des Fahrzeugs 8 und die Objektgeschwindigkeit v_obj derart gewählt sind, dass sich das Fahrzeug 8 auf einem Kollisionskurs mit dem Objekt 4 befindet, so ändern sich weder die Relativgeschwindigkeit v_rad noch der Objektwinkel $\varphi$ mit der Zeit.

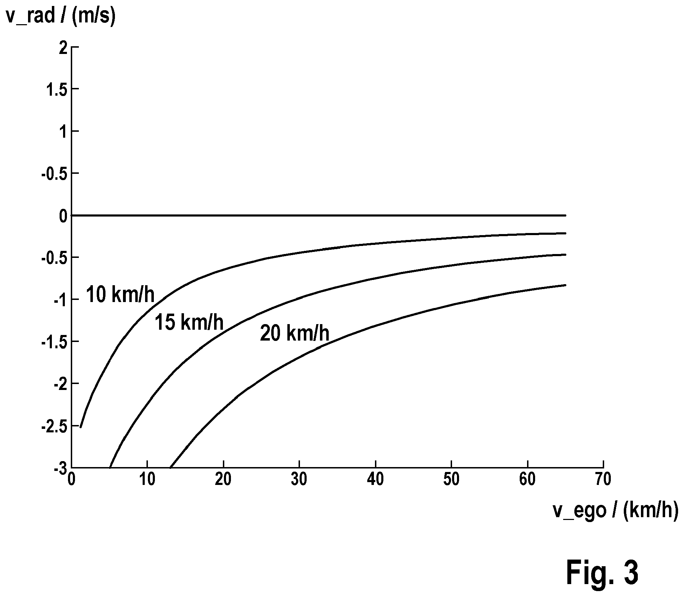

In Figur 3 sind die Relativgeschwindigkeiten eines senkrecht kreuzenden Objekts in Abhängigkeit der Eigengeschwindigkeit v_ego des Fahrzeugs 8 für drei unterschiedliche Objektgeschwindigkeiten v_obj von 10 km/h, 15 km/h und 20 km/h illustriert.

Anhand geometrischer Überlegungen lässt sich folgender Zusammenhang zwischen der Relativgeschwindigkeit v_rad, der Objektgeschwindigkeit v_obj, der Eigengeschwindigkeit v_ego des Fahrzeugs 8, dem Objektwinkel $\varphi$

und dem Schnittwinkel $\psi$ herleiten:

$$v_{rad} = v_{obj}\,\cos(\varphi - \psi) + v_{ego}\,(1 - \cos\varphi)$$

Falls sich das Objekt 4 und die Vorrichtung 1 auf Kollisionskurs befinden, lassen sich darüber hinaus folgende Beziehungen herleiten:

$$\frac{-\sin\varphi}{v_{obj}} \; = \; \frac{\sin(90° + \varphi + 90° - \psi)}{v_{ego}}$$

$$\tan\varphi = \frac{-\sin\psi}{\dfrac{v_{ego}}{v_{obj}} - \cos\psi}$$

Die obigen drei Beziehungen erlauben es, unter Verwendung des fest ermittelten Wertes der Eigengeschwindigkeit vego jedem Schnittwinkel $\psi$ und jeder Objektgeschwindigkeit v_obj genau eine kollisionsrelevante Relativgeschwindigkeit v_rad und einen kollisionsrelevanten Objektwinkel $\varphi$ zuzuordnen.

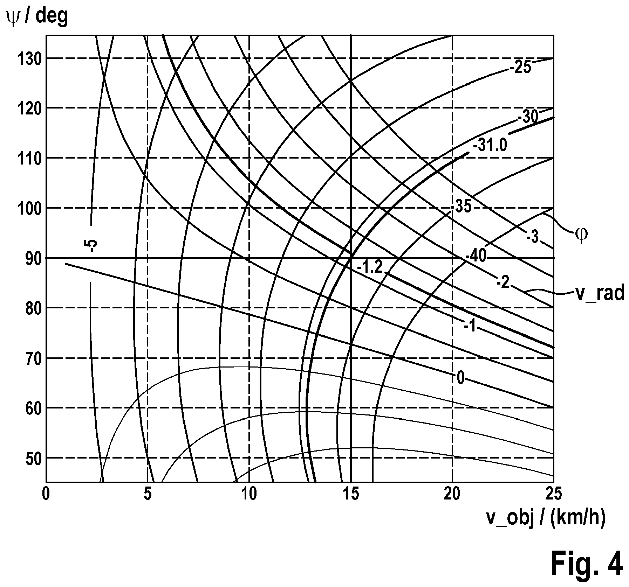

Beispielhaft ist in Figur 4 die Abhängigkeit der Relativgeschwindigkeit v_rad und des Objektwinkels $\varphi$ von dem Schnittwinkel $\psi$ und der Objektgeschwindigkeit v_obj für eine Eigengeschwindigkeit v_ego des Fahrzeugs 8 von 25 km/h illustriert. Beispielsweise ergibt sich für eine senkrecht kreuzende Trajektorie, d. h. ein Schnittwinkel $\psi$ von 90 Grad, mit einer Objektgeschwindigkeit v_obj von 15 km/h eine Relativgeschwindigkeit v_rad von -1,2 Metern und ein Objektwinkel $\varphi$ von -31 Grad.

Vorzugsweise wird der kollisionskritische Bereich mittels Toleranzbereiche erweitert, sodass die endlichen Ausdehnungen des Fahrzeugs 8 und des Objekts 4 berücksichtigt werden. Hierbei kann gemäß einer Ausführungsform berücksichtigt werden, dass Abweichungen in größeren Entfernungen einen geringeren Einfluss haben als bei kleineren Abständen. Die Toleranzbereiche und die kollisionskritischen Bereiche können somit abstandsabhängig sein.

Zu Figur 1 zurückkehrend kann die Detektionseinrichtung 31 den auszuwertenden Spektralbereich zuerst auf diejenigen Bereiche einschränken, welche Objekten 4 mit negativer Relativgeschwindigkeit v_rad entsprechen, da nur solche Objekte 4 in naher Zukunft mit dem Fahrzeug 8 kollidieren können.

Weiter kann die Detektionseinrichtung 31 den Spektralbereich auf Relativgeschwindigkeiten v_rad und Objektwinkel $\varphi$ einschränken, welche die oben diskutierte Abhängigkeit erfüllen. Die als Parameter verbleibenden Objektgeschwindigkeiten v_obj und Schnittwinkel $\psi$ können in bestimmten vorgegebenen Bereichen ausgewählt werden. Beispielsweise können lediglich Schnittwinkel $\psi$ berücksichtigt werden, welche kleiner sind als vorgegebene Schwellenwerte. Weiter können Objekte 4 mit Objektgeschwindigkeiten v_obj, welche kleiner sind als ein vorgegebener Schwellenwert, unberücksichtigt bleiben. Lediglich Objekte 4, deren Objektgeschwindigkeit vobj den vorgegebenen Schwellenwert überschreitet, werden erfasst und ausgewertet.

Die Detektionseinrichtung 31 detektiert Objekte innerhalb der eingeschränkten kollisionsrelevanten Spektralbereiche der Radardaten. Während die Auswertung im Folgenden nur für ein einzelnes Objekt 4 beschrieben wird, kann die Detektionseinrichtung 31 auch parallel eine Vielzahl von Objekten 4 detektieren. Die Detektionseinrichtung 31 ermittelt insbesondere anhand der Radardaten die Relativgeschwindigkeit v_rad und den Objektwinkel $\varphi$ des Objekts 4. Beispielsweise können mehrere Signalanteile als Peaks im Spektrum detektiert werden und die Objektwinkel $\varphi$ anhand von separaten DML-Winkelschätzungen (deterministic maximum likelihood) bestimmt werden.

Falls die Detektionseinrichtung 31 ein Objekt 4 detektiert hat, ermittelt eine Tracking-Einrichtung 32 einen zeitlichen Verlauf der Relativgeschwindigkeit v_rad und des Objektwinkels $\varphi$ des Objekts 4.

Eine Bewertungseinrichtung 33 ist dazu ausgebildet, zu bestimmen, ob die Werte der Relativgeschwindigkeit v_rad und des Objektwinkels $\varphi$ im Wesentlichen konstant bleiben. Dazu kann die Bewertungeinrichtung 33 untersuchen, ob ein Betrag eines Gradienten der Relativgeschwindigkeit v_rad und des Einfallswinkels jeweilige Schwellenwerte nicht überschreitet. Allgemeiner kann die Bewertungseinrichtung 33 ein Kritikalitätsmaß bzw. eine Wahrscheinlichkeit ermitteln, dass die Relativgeschwindigkeit v_rad und der Objektwinkel $\varphi$ im Wesentlichen konstant bleiben, also eine Kollision mit dem Objekt 4 erfolgt. Das Kritikalitätsmaß kann insbesondere iterativ anhand neuer Radardaten angepasst werden.

In Abhängigkeit von dem berechneten Kritikalitätsmaß kann die Bewertungseinrichtung 33 die Schalteinrichtung 23 ansteuern, um eine entsprechende der Antenneneinrichtungen 21, 22 auszuwählen.

Die Vorrichtung 1 umfasst weiter eine erste Berechnungseinrichtung 12 und eine zweite Berechnungseinrichtung 14. Die erste Berechnungseinrichtung 12 ist dazu ausgebildet, anhand der FMCW-Radardaten eine Geschwindigkeit, einen Abstand und einen Objektwinkel φ des Objekts 4 genauer zu berechnen und zu tracken. Die zweite Berechnungseinrichtung 14 ist dazu ausgebildet, anhand der CW-Radardaten eine Fußgängererkennung durch Berechnen eines Mikrodopplereffekts durchzuführen. Die Ergebnisse der Fußgängererkennung können von der ersten Berechnungseinrichtung 12 berücksichtigt werden.

Weiter umfasst die Vorrichtung eine Notbremseinrichtung 13, welche in Abhängigkeit von den von der ersten Berechnungseinrichtung 12 ermittelten Daten eine Notbremsung durchführen kann. Zur Plausibilisierung kann hierzu auch das von der Bewertungseinrichtung 33 erzeugte Kritikalitätsmaß berücksichtigt werden.

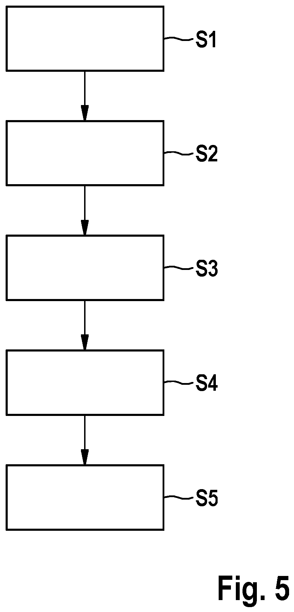

In Figur 5 ist ein Flussdiagramm eines Verfahrens zum Detektieren kritischer Querbewegungen illustriert. Das Verfahren kann insbesondere durch eine oben beschriebene Vorrichtung 1 durchgeführt werden.

In einem Verfahrensschritt S1 wird ein CW-Radarsignal ausgesendet und das reflektierte CW-Radarsignal wird empfangen und Radardaten werden erzeugt. Die dazu verwendete Radarvorrichtung 2 kann, wie oben beschrieben, mehrere Antenneneinrichtungen 21, 22 mit unterschiedlichen Erfassungsbereichen 10, 11 umfassen.

Im Verfahrensschritt S2 werden kollisionsrelevante Spektralbereiche der Radardaten in Abhängigkeit von der Eigengeschwindigkeit v_ego der Radarvorrichtung 2 ermittelt. Insbesondere kann die Relativgeschwindigkeit v_rad auf negative Bereiche eingeschränkt werden. Wie oben beschrieben, können darüber hinaus Werte bzw. Wertebereiche der zu detektierenden Relativgeschwindigkeiten v_rad und entsprechenden Objektwinkel φ eingeschränkt werden, sodass lediglich kollisionskritische Situationen berücksichtigt werden.

Im Verfahrensschritt S3 wird ein Objekt 4 anhand der kollisionsrelevanten Spektralbereiche der Radardaten erfasst und weiter wird eine Zeitabhängigkeit der Relativgeschwindigkeit v_rad und des Objektwinkels φ des Objekts 4 ermittelt.

Im Verfahrensschritt S4 wird eine kritische Querbewegung des Objekts 4 unter Verwendung der Zeitabhängigkeit der Relativgeschwindigkeit v_rad und des Objektwinkels φ des Objekts 4 detektiert.

In einem optionalen weiteren Verfahrensschritt S5 können bestimmte Antenneneinrichtungen 21, 22 in Abhängigkeit von dem Ergebnis der Detektion ausgewählt bzw. angesteuert werden. Darüber hinaus ist, wie oben beschrieben, eine Durchführung einer Notbremsung möglich.

**Patentansprüche**

1. Verfahren zum Detektieren kritischer Querbewegungen, bei welchen sich ein Objekt (4) entlang einer Objekttrajektorie auf eine Trajektorie einer Radarvorrichtung (2) zubewegt, mit den Schritten:

   Aussenden (S1) eines CW-Radarsignals und Erzeugen von Radardaten anhand des empfangenen reflektierten CW-Radarsignals mittels der Radarvorrichtung (2);
   Ermitteln (S2) kollisionsrelevanter Spektralbereiche der Radardaten in Abhängigkeit von einer Eigengeschwindigkeit (v ego) der Radarvorrichtung (2), wobei die kollisionsrelevanten Spektralbereiche derart bestimmt werden, dass lediglich Objekte (4) mit negativer Relativgeschwindigkeit (v_rad) betrachtet werden;
   Ermitteln (S3) einer Zeitabhängigkeit der Relativgeschwindigkeit (v_rad) und eines Objektwinkels (φ) des Objekts (4) durch Auswerten der Radardaten in den ermittelten Spektralbereichen; und
   Detektieren (S4) einer kritischen Querbewegung des Objekts (4) unter Verwendung der Zeitabhängigkeit der Relativgeschwindigkeit (v_rad) und des Objektwinkels (φ) des Objekts (4), wobei eine kritische Querbewegung des Objekts (4) detektiert wird, falls relative Veränderungen der Relativgeschwindigkeit (v_rad) und des Objektwinkels (φ) vorgegebene Schwellenwerte nicht überschreiten.

2. Verfahren nach Anspruch 1, wobei die Radarvorrichtung (2) eine Vielzahl von Antenneneinrichtungen (21, 22) mit voneinander verschiedenen Erfassungsbereichen (10, 11) umfasst, wobei eine Ansteuerung der Antenneneinrichtungen (21, 22) davon abhängig ist, ob eine kritische Querbewegung des Objekts (4) erkannt wird.

3. Verfahren nach Anspruch 2, wobei, falls eine kritische Querbewegung des Objekts (4) erkannt wird, mindestens eine der Antenneneinrichtungen (21, 22) angesteuert wird, ein FMCW-Radarsignal auszusenden, und wobei anhand des empfangenen reflektierten FMCW-Radarsignals eine Bewegung des Objekts (4) genauer bestimmt wird.

4. Verfahren nach einem der vorangehenden Ansprüche, wobei die Radarvorrichtung (2) eine Vielzahl von Empfängereinrichtungen aufweist, und wobei die Objektwinkel (φ) anhand von Phasenunterschieden des von verschiedenen Empfängereinrichtungen empfangenen reflektierten CW-Radarsignals berechnet werden.

5. Verfahren nach einem der vorangehenden Ansprüche, wobei die kollisionsrelevanten Spektralbereiche unter der Annahme einer Konstanz der Eigengeschwindigkeit (v_ego) der Radarvorrichtung (2), der Relativgeschwindigkeit (v_rad) des Objekts (4) und des Objektwinkels (φ) des Objekts (4) bestimmt werden.

6. Verfahren nach einem der vorangehenden Ansprüche, wobei kollisionskritische Relativgeschwindigkeiten (v_rad) und entsprechende kollisionskritische Objektwinkel (φ) in Abhängigkeit von der Eigengeschwindigkeit (v_ego) der Radarvorrichtung (2), eines Schnittwinkels (ψ) zwischen einer Trajektorie (6) des Objekts (4) und einer Trajektorie (7) der Radarvorrichtung (2) und einer Objektgeschwindigkeit (v_obj) des Objekts (4) bestimmt werden, und wobei die kollisionsrelevanten Spektralbereiche auf kollisionskritische Eigengeschwindigkeiten (v_ego) und kollisionskritische Objektwinkel (φ) eingeschränkt werden, welche der Eigengeschwindigkeit (v_ego) der Radarvorrichtung (2), einem vorgegebenen Bereich der Schnittwinkel (ψ) und einem vorgegebenen Bereich der Objektgeschwindigkeit (v_obj) entsprechen.

7. Verfahren nach Anspruch 6, wobei die kollisionskritischen Relativgeschwindigkeiten (v_rad) und kollisionskritischen Objektwinkel (φ) weiter unter Berücksichtigung endlicher Ausdehnungen des Objekts (4) und eines Fahrzeugs (8), welches die Radarvorrichtung (2) aufweist, bestimmt werden.

8. Vorrichtung (1) zum Detektieren kritischer Querbewegungen, bei welchen sich ein Objekt (4) entlang einer Objekttrajektorie auf eine Trajektorie einer Radarvorrichtung (2) zubewegt, mit:

der Radarvorrichtung (2), welche dazu ausgebildet ist, ein CW-Radarsignal auszusenden und anhand des empfangenen reflektierten CW-Radarsignals Radardaten zu erzeugen; und
einer Recheneinrichtung (3), welche dazu ausgebildet ist, kollisionsrelevante Spektralbereiche der Radardaten in Abhängigkeit von einer Eigengeschwindigkeit (v_ego) der Radarvorrichtung (2) zu ermitteln, wobei die kollisionsrelevanten Spektralbereiche derart bestimmt werden, dass lediglich Objekte mit negativer Relativgeschwindigkeit (v_rad) betrachtet werden, und eine Zeitabhängigkeit der Relativgeschwindigkeit (v_rad) und eines Objektwinkels (φ) des Objekts (4) durch Auswerten der Radardaten in den ermittelten Spektralbereichen zu ermitteln, und eine kritische Querbewegung des Objekts (4) unter Verwendung der Zeitabhängigkeit der Relativgeschwindigkeit (v_rad) und des Objektwinkels (φ) des Objekts (4) zu detektieren, wobei die Recheneinrichtung (3) dazu ausgebildet ist, die kritische Querbewegung des Objekts (4) zu detektieren, falls relative Veränderungen der Relativgeschwindigkeit (v_rad) und des Objektwinkels (φ) vorgegebene Schwellenwerte nicht überschreiten.

**Claims**

1. Method for detecting critical transverse movements during which an object (4) moves along an object trajectory towards a trajectory of a radar apparatus (2), comprising the following steps:

emitting (S1) a CW radar signal and generating radar data on the basis of the received reflected CW radar signal by means of the radar apparatus (2);
ascertaining (S2) collision-relevant spectral ranges of the radar data as a function of an ego velocity (v_ego) of the radar apparatus (2), wherein the collision-relevant spectral ranges are determined in such a way that only objects (4) with negative relative velocity (v_rad) are considered;
ascertaining (S3) a time dependence of the relative velocity (v_rad) and an object angle (φ) of the object (4) by evaluating the radar data in the ascertained spectral ranges; and
detecting (S4) a critical transverse movement of the object (4) using the time dependence of the relative velocity (v_rad) and the object angle (φ) of the object (4), wherein a critical transverse movement of the object (4) is detected if relative changes in the relative velocity (v_rad) and the object angle (φ) do not exceed predefined threshold values.

2. Method according to Claim 1, wherein the radar apparatus (2) comprises a plurality of antenna devices (21, 22) with mutually different capture ranges (10, 11), wherein actuation of the antenna devices (21, 22) is dependent on whether a critical transverse movement of the object (4) is recognized.

3. Method according to Claim 2, wherein, if a critical transverse movement of the object (4) is recognized, at least one of the antenna devices (21, 22) is actuated to emit an FMCW radar signal, and wherein a movement of the object (4) is determined more accurately on the basis of the received reflected FMCW radar signal.

4. Method according to any of the preceding claims, wherein the radar apparatus (2) has a plurality of receiver devices, and wherein the object angles ($\varphi$) are calculated on the basis of phase differences of the reflected CW radar signal received by different receiver devices.

5. Method according to any of the preceding claims, wherein the collision-relevant spectral ranges are determined under the assumption that the ego velocity (v_ego) of the radar apparatus (2), the relative velocity (v_rad) of the object (4) and the object angle ($\varphi$) of the object (4) are constant.

6. Method according to any of the preceding claims, wherein collision-critical relative velocities (v_rad) and corresponding collision-critical object angles ($\varphi$) are determined as a function of the ego velocity (v_ego) of the radar apparatus (2), an intersection angle ($\psi$) between a trajectory (6) of the object (4) and a trajectory (7) of the radar apparatus (2) and an object velocity (v_obj) of the object (4), and wherein the collision-relevant spectral ranges are restricted to collision-critical ego velocities (v_ego) and collision-critical object angles ($\varphi$) which correspond to the ego velocity (v_ego) of the radar apparatus (2), to a predefined range of the intersection angles ($\psi$) and to a predefined range of the object velocity (v_obj).

7. Method according to Claim 6, wherein the collision-critical relative velocities (v_rad) and collision-critical object angles ($\varphi$) are further determined taking account of finite extents of the object (4) and of a vehicle (8) which has the radar apparatus (2).

8. Apparatus (1) for detecting critical transverse movements during which an object (4) moves along an object trajectory towards a trajectory of a radar apparatus (2), comprising:

the radar apparatus (2), configured to emit a CW radar signal and to generate radar data on the basis of the received reflected CW radar signal; and
a computing device (3), configured to ascertain collision-relevant spectral ranges of the radar data as a function of an ego velocity (v_ego) of the radar apparatus (2), wherein the collision-relevant spectral ranges are determined in such a way that only objects with negative relative velocity (v_rad) are considered, and to ascertain a time dependence of the relative velocity (v_rad) and an object angle ($\varphi$) of the object (4) by evaluating the radar data in the ascertained spectral ranges, and to detect a critical transverse movement of the object (4) using the time dependence of the relative velocity (v_rad) and the object angle ($\varphi$) of the object (4), wherein the computing device (3) is configured to detect the critical transverse movement of the object (4) if relative changes in the relative velocity (v_rad) and the object angle ($\varphi$) do not exceed predefined threshold values.

**Revendications**

1. Procédé permettant de détecter des mouvements transversaux critiques au cours desquels un objet (4) s'approche le long d'une trajectoire d'objet d'une trajectoire d'un dispositif radar (2), comprenant les étapes consistant à :

émettre (S1) un signal radar CW et générer des données radar à l'aide du signal radar CW réfléchi reçu, au moyen du dispositif radar (2) ;
établir (S2) des régions spectrales, liées aux collisions, des données radar en fonction d'une vitesse propre (v_ego) du dispositif radar (2), dans lequel les régions spectrales liées aux collisions sont déterminées de telle sorte que seuls des objets (4) ayant une vitesse relative négative (v_rad) soient pris en considération ;
établir (S3) une dépendance temporelle de la vitesse relative (v_rad) et d'un angle d'objet ($\varphi$) de l'objet (4) par l'analyse des données radar dans les régions spectrales établies ; et
détecter (S4) un mouvement transversal critique de l'objet (4) en utilisant la dépendance temporelle de la vitesse relative (v_rad) et de l'angle d'objet ($\varphi$) de l'objet (4), dans lequel un mouvement transversal critique de l'objet (4) est détecté si des changements relatifs de la vitesse relative (v_rad) et de l'angle d'objet ($\varphi$) ne dépassent pas des valeurs seuils prédéfinies.

2. Procédé selon la revendication 1, dans lequel le dispositif radar (2) comprend une pluralité d'équipements d'antenne (21, 22) avec des zones de détection (10, 11) mutuellement différentes, dans lequel un pilotage des équipements d'antenne (21, 22) dépend du fait qu'un mouvement transversal critique de l'objet (4) est identifié.

3. Procédé selon la revendication 2, dans lequel, si un mouvement transversal critique de l'objet (4) est identifié, au moins l'un des équipements d'antenne (21, 22) est piloté pour émettre un signal radar FMCW, et dans lequel un mouvement de l'objet (4) est déterminé plus précisément à l'aide du signal radar FMCW réfléchi reçu.

4. Procédé selon l'une quelconque des revendications précédentes, dans lequel le dispositif radar (2) présente une pluralité d'équipements récepteurs, et dans lequel les angles d'objet (φ) sont calculés à l'aide de différences de phase du signal radar CW réfléchi reçu par les différents équipements récepteurs.

5. Procédé selon l'une quelconque des revendications précédentes, dans lequel les régions spectrales liées aux collisions sont déterminées en supposant une certaine constance de la vitesse propre (v_ego) du dispositif radar (2), de la vitesse relative (v_rad) de l'objet (4) et de l'angle d'objet (φ) de l'objet (4).

6. Procédé selon l'une quelconque des revendications précédentes, dans lequel les vitesses relatives (v_rad) critiques pour les collisions et les angles d'objet (φ) critiques pour les collisions correspondants sont déterminés en fonction de la vitesse propre (v_ego) du dispositif radar (2), d'un angle d'intersection (ψ) entre une trajectoire (6) de l'objet (4) et une trajectoire (7) du dispositif radar (2), et d'une vitesse d'objet (v_obj) de l'objet (4), et dans lequel les régions spectrales liées aux collisions sont limitées à des vitesses propres (v_ego) critiques pour les collisions et à des angles d'objet (φ) critiques pour les collisions qui correspondent à la vitesse propre (v_ego) du dispositif radar (2), à une plage prédéfinie des angles d'intersection (ψ) et à une plage prédéfinie de la vitesse d'objet (v_obj).

7. Procédé selon la revendication 6, dans lequel les vitesses relatives (v_rad) critiques pour les collisions et les angles d'objet (φ) critiques pour les collisions sont déterminés en outre en tenant compte des dimensions finies de l'objet (4) et d'un véhicule (8) qui présente le dispositif radar (2).

8. Dispositif (1) permettant de détecter des mouvements transversaux critiques au cours desquels un objet (4) s'approche le long d'une trajectoire d'objet d'une trajectoire d'un dispositif radar (2), comprenant :

le dispositif radar (2) qui est réalisé pour émettre un signal radar CW et pour générer des données radar à l'aide du signal radar CW réfléchi reçu ; et
un équipement de calcul (3) qui est réalisé pour établir des régions spectrales, liées aux collisions, des données radar en fonction d'une vitesse propre (v_ego) du dispositif radar (2), dans lequel les régions spectrales liées aux collisions sont déterminées de telle sorte que seuls des objets ayant une vitesse relative négative (v_rad) soient pris en considération, et pour établir une dépendance temporelle de la vitesse relative (v_rad) et d'un angle d'objet (φ) de l'objet (4) par l'analyse des données radar dans les régions spectrales établies, et pour détecter un mouvement transversal critique de l'objet (4) en utilisant la dépendance temporelle de la vitesse relative (v_rad) et de l'angle d'objet (φ) de l'objet (4), dans lequel l'équipement de calcul (3) est réalisé pour détecter le mouvement transversal critique de l'objet (4) si des changements relatifs de la vitesse relative (v_rad) et de l'angle d'objet (φ) ne dépassent pas des valeurs seuils prédéfinis.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004024706 A1
- DE 19638387 A1
- EP 2068173 A1
- DE 102013018310 A1